# EUROPEAN PATENT APPLICATION

(11) **EP 1 069 499 A2**
(43) Date of publication of application: **17.01.2001**
(21) Application number: 00114750.3
(22) Date of filing: 09.07.2000
(51) Int. Cl.: G06F 9/38

(54) **Data processing apparatus and method for simultaneously executing plural instructions**

(30) Priority: 16.07.1999 JP 20293599
(71) Applicant: NEC CORPORATION, Tokyo (JP)
(72) Inventor: Sugimoto, Hideki, Minato-ku, Tokyo (JP)
(74) Representative: Baronetzky, Klaus, Dipl.-Ing.

(57) **Abstract**

A data processing apparatus includes a plurality of execution units (22₁ to 22₄) for executing a plurality of instructions fetched from a cache memory (15) or an instruction memory (11), at a same time. Then, in case of a cache miss-hit in an instruction fetch, a hazard detector (16) detects an executable instruction from the plurality of instructions fetched from the instruction memory (11), and generates a tag data, and then sends an instruction selected based on the tag data to the execution unit (22₁ to 22₄), and also stores the generated tag data and the plurality of fetched instructions in the cache memory (15). On the other hand, at a time of a miss-hit, it sends to the execution unit (22₁ to 22₄) an instruction selected in accordance with the tag data stored in the cache memory (15), from the plurality of instructions stored in the cache memory (15). Thus, it is possible to provide the data processing apparatus and the data processing method that can treat all instructions including a branch instruction at a high speed, irrespectively of a small hardware.

## Description

### Background of the Invention

### 1. Field of the Invention

The present invention relates to a data processing apparatus and a data processing method, which can execute a plurality of instructions at the same time. More particularly, the present invention relates to a technique in which instructions, which can be executed simultaneously, are detected rapidly.

### 2. Description of the Related Art

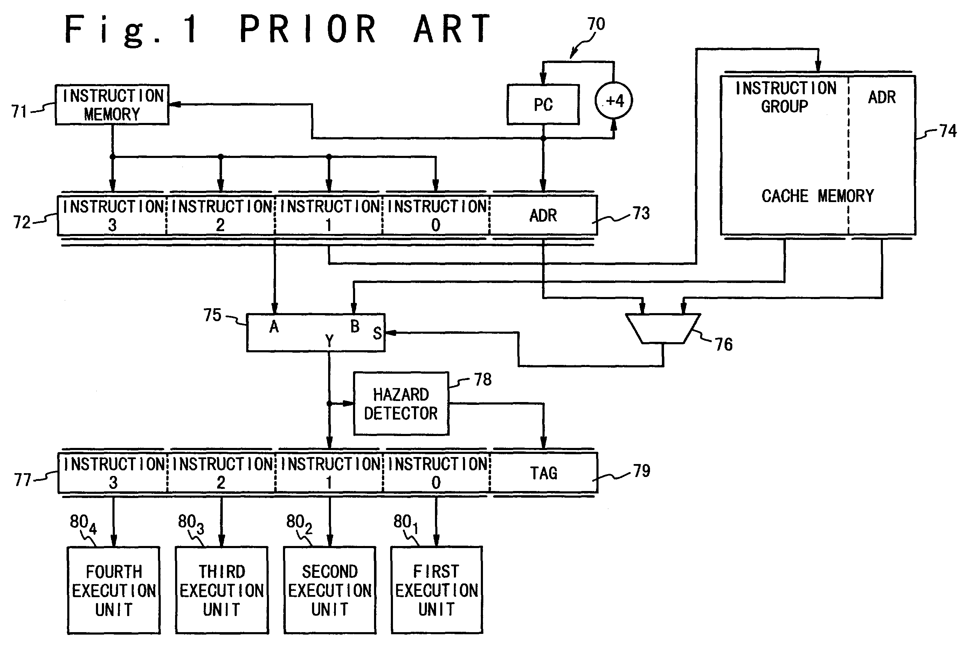

Conventionally, a data processing apparatus has been well known in which a plurality of instructions can be executed at the same time, and also an employment of a cache memory enables a speed of an instruction fetch to be made faster, and further an employment of a pipe line control method enables a speed of an instruction execution to be made faster. Fig. 1 is a block diagram showing the configuration of such a conventional data processing apparatus. Let us suppose that an instruction language constituted by 32 bits (four bytes) is used in this data processing apparatus.

This data processing apparatus comprises a program counter (PC) 70, an instruction memory 71, an instruction buffer 72, an address latch (ADR) 73, a cache memory 74, a selector 75, a comparator 76, an instruction register 77, a hazard detector 78, a tag latch (TAG) 79, and a first execution unit 80₁ to a fourth execution unit 80₄.

The program counter 70 is used to control an execution order of instructions included in a program stored in the instruction memory 71. This program counter 70 holds an instruction address to designate an instruction stored in the instruction memory 71. The content of the program counter 70 is incremented by each "+4" associated with the progress of the program. The instruction address outputted from the program counter 70 is sent to the instruction memory 71 and to the address latch 73.

The instruction memory 71 stores therein a plurality of instructions constituting the program. In this instruction memory 71, when the instruction address is sent from the program counter 70, contents of areas of 16 bytes designated by the instruction address are read out at the same time. Thus, four instructions are simultaneously read out from this instruction memory 71. Hereafter, when the four instructions are generally referred to, they are merely referred to as "an instruction group". If the four Instructions need to be respectively discriminated, they are referred to as an instruction 0, an instruction 1, an instruction 2 and an instruction 3, respectively. The Instruction group read out from this Instruction memory 71 is sent to the instruction buffer 72.

The instruction buffer 72 transiently stores therein the instruction group read out from the instruction memory 71. A content of the instruction buffer 72 is sent to the cache memory 74 and an input terminal A of the selector 75. The address latch 73 latches an instruction address (ADR) from the program counter 70. A content of the address latch 73 is sent to the cache memory 74 and the comparator 76.

The cache memory 74 stores therein a plurality of combinations of the instruction group from the instruction buffer 72 and the instruction address (ADR) from the address latch 73. The instruction group read out from the cache memory 74 is sent to an input terminal B of the selector 75, and the instruction address (ADR) is sent to the comparator 76, respectively.

The comparator 76 compares the instruction address (ADR) from the address latch 73 with the instruction address (ADR) from the cache memory 74, and outputs a hit signal indicative of the compared result. If the hit signal is at "1", it indicates that both the instruction addresses agree with each other, namely, they hit the cache memory 74. On the other hand, if the hit signal is at "0", it indicates that both the instruction addresses do not agree with each other, namely, they miss-hit the cache memory 74. The hit signal from the comparator 76 is sent to a selection terminal S of the selector 75.

The selector 75 selects a signal inputted to the input terminal A if the hit signal from the comparator 76 is at "0", and selects a signal inputted to the input terminal B if it is at "1". Thus, the selector 75 outputs the instruction group from the cache memory 74 in the case of the hit to the cache memory 74, and outputs the instruction group from the instruction buffer 72 in the case of the miss-hit. The instruction group outputted from the selector 75 is sent to the instruction register 77 and the hazard detector 78.

The hazard detector 78 analyzes the instruction group sent from the selector 75, and detects executable instructions in the instruction group. The detected result is sent to the tag latch 79 as a tag. Here, the tag is composed of data of four bits respectively corresponding to the instructions 3 to 0 stored in the instruction register 77. The executable instruction among the instructions 3 to 0 is represented by "0". If the instruction 0 and the instruction 2 can be executed at the same time, the tag becomes at "1010". The tag from the hazard detector 78 is sent to the tag latch 79.

The instruction register 77 transiently stores therein the instruction group from the selector 75. Whether or not the instructions 0 to 3 set in the instruction register 77 are respectively sent to the first execution unit 80₁ to the fourth execution unit 80₄ is controlled in accordance with the tag from the tag latch 79. In this case, an instruction corresponding to a tag "0" stored in the tag latch 79 is sent to the execution unit. In the above-mentioned example, the instruction 0 is sent to the first execution unit 80₁, the instruction 1 is not sent to the second execution unit 80₂, the instruction 2 is sent to the third execution unit 80₃, and the instruction 3 is not sent to the fourth execution unit 80₄. As a result, the instruction 0 and the instruction 2 are executed at the same time.

Each of the first execution unit 80₁ to the fourth execution unit 80₄ decodes the instruction from the instruction register 77, and executes a process based on the decoded result. The configuration of the conventional data processing apparatus has been functionally described above. However, because this data processing apparatus employs a pipeline control method, the instruction fetch, the hazard detection, the instruction decode, the instruction execution and the like are actually overlapped and executed. These details will be described later.

The operation of the conventional data processing apparatus having the above-mentioned configuration will be described below.

When the instruction address outputted from the program counter 70 is sent to the instruction memory 71, the four instructions (instructions 3 to 0) are fetched from the instruction memory 71, and set in the instruction buffer 72. Simultaneously, the instruction address outputted from the program counter 70 is latched in the address latch 73. Moreover, the content of the program counter 70 is incremented by "+4" in order to prepare for a next instruction fetch.

When the instruction address from the program counter 70 is latched in the address latch 73, the comparator 76 compares the instruction address (ADR) from the address latch 73 with the instruction address (ADR) from the cache memory 74, and then generates the hit signal. The mere symbol of the comparator 76 is shown in Fig. 1 for the simple illustration, but the actual data processing apparatus is designed such that the comparator 76 compares the instruction address (ADR) set in the address latch 73 with all the instruction addresses (ADR) existing in the cache memory 74, and then investigates whether or not there is any coincident existence.

If the comparator 76 outputs "0" indicative of a cache miss-hit as the hit signal, namely, if the instruction address (ADR) identical to the instruction address (ADR) latched in the address latch 73 does not exist in the cache memory 74, a set of the instruction group stored in the instruction buffer 72 and the instruction address (ADR) stored in the address latch 73 is stored in the cache memory 74. Also, since the hit signal is at "0", the input terminal A of the selector 75 is selected. Thus, the content of the instruction buffer 72 is sent to the instruction register 75 and the hazard detector 78.

On the other hand, if the comparator 76 outputs "1" indicative of a cache hit as the hit signal, namely, if the instruction address (ADR) identical to the instruction address (ADR) latched in the address latch 73 exists in the cache memory 74, the input terminal B of the selector 75 is selected. Thus, the instruction group read out from the cache memory 74 is sent to the instruction register 75 and the hazard detector 78

The hazard detector 78 analyzes the instructions 3 to 0 outputted from the selector 75, irrespectively of the cache hit/miss-hit, and detects the executable instruction, and then generates the tag based on the detected result. This generated tag is latched in the tag latch 79. Then, as mentioned above, it is controlled whether or not the instructions 3 to 0 set in the instruction register 75 are respectively sent to the first execution unit 80₁ to the fourth execution unit 80₄, in accordance with the tag from the tag latch 79. The instructions sent to the execution units are executed simultaneously.

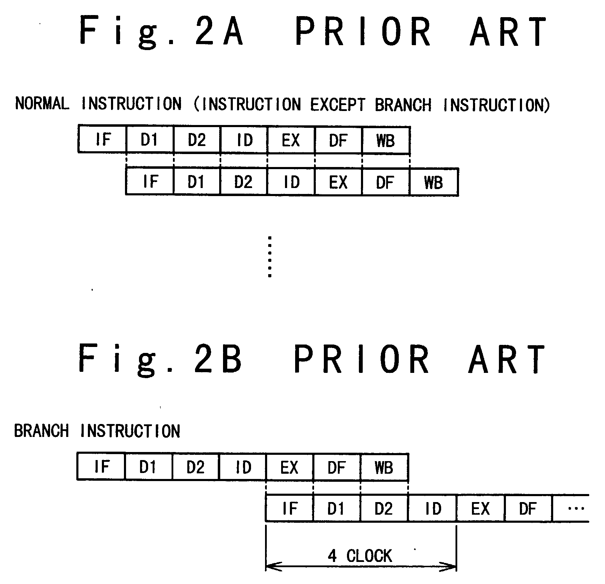

Figs. 2A and 2B show the stage configuration when the above-mentioned operations are performed by using the pipeline control method. Let us suppose that one stage is executed in one clock. Fig. 2A shows an example of the stage configuration when normal instructions (instructions except a branch instruction) are continuously executed. In this case, the execution of one instruction is completed by executing all seven stages composed of an instruction fetch (IF), a hazard detection 1 (D1), a hazard detection 2 (D2), an instruction decode (ID), an instruction execution (EX), a data transfer (DF) and a write (WB). The next instruction proceeds overlapping with the previous instruction after the progress of a stage is started delayed by one clock. The operation of the normal instruction is equivalent to the operation in which the execution of the instruction is completed in one clock, since such a pipe line control is done.

Fig. 2B shows another example of the stage configuration when a branch instruction is executed. In this case, if it is judged that the branch instruction is provided at the stage of the instruction decode (ID), an overlap progress of a stage of a next instruction is stopped. The progress of the stage is resumed delayed by three clocks, from the stage of the instruction fetch (IF). Thus, in this example shown in Fig. 2B, it takes an excessive time corresponding to the three clocks if the branch instruction is executed. It is said that a rate at which such a branch instruction appears in a program is about 10 %. Also, it is said that a performance is dropped by about 10 % if one stage is excessively inserted into the pipe line control.

By the way, a gate delay exists until the output of the signal indicative of the detection result after the input of the signal to the hazard detector. Thus, the hazard detection requires a certain time (the above-mentioned example indicates the example in which the hazard detection requires two clocks). Hence, if an operation frequency is made higher (a period of one stage is made shorter) in order to improve the performance, it is necessary to increase the number of stages (the number of clocks) for the hazard detection. As a result, since the number of stages in the pipeline is increased, amount of the hardware is increased to thereby increase a cost of the data processing apparatus and also deteriorate a latency of the instruction execution. If the latency is made longer, the performance is extremely dropped especially in case of a low operation frequency. This is because the hazard detection requiring a complex operation and a long process time is carried out even when a cache hit is occurred in spite of an instruction supply speed is fast.

A related prior art disclosed in Japanese Laid- Open Patent Application (JP-A-Heisei, 6-236273) discloses a method and a system to dispatch a plurality of instructions in a single cycle on a super scalar processor system. Also, Japanese Laid- Open Patent Application (JP-A-Heisei, 10-320196) discloses microprocessor for determining an instruction execution order dynamically based on a record. The record is saved when the instruction is executed to conceal the latency of the instruction execution time.

### Summary of the Invention

The present invention has been made to solve the above-described problems, and therefore, has an object to provide a data processing apparatus and a data processing method that can treat all instructions including a branch instruction at a high speed, irrespectively of a small hardware.

To achieve the above-described object, a data processing apparatus, according to the present invention, includes an instruction memory, a hazard detector, a cache memory and a plurality of execution units. The instruction memory stores therein instructions. The hazard detector detects whether or not the plurality of instructions fetched from the instruction memory can be executed at the same time, and outputs the detected result as a tag data. The cache memory stores a set of the plurality of instructions fetched from the instruction memory and the tag data outputted from the hazard detector. Also, the plurality of execution units simultaneously executes the plurality of instructions fetched from the cache memory based on the tag data fetched from the cache memory.

In a data processing apparatus according to the present invention, the hazard detector detects whether or not the plurality of instructions fetched from the instruction memory can be executed, and outputs the detected result as a tag data. Here, the case when the plurality of instructions are fetched from the instruction memory is a case of a cache miss-hit. Thus, the hazard detector functions only at the time of the cache miss-hit, and generates the tag data.

The tag data generated at the time of this cache miss-hit is correlated to the plurality of instructions fetched from the instruction memory and then stored in the cache memory. At the time of the cache hit, the plurality of instructions fetched from the cache memory are sent to a plurality of execution units in accordance with the tag data corresponding to the plurality of instructions, and simultaneously executed. Thus, at the time of the cache hit, the hazard detector is never driven differently from the conventional data processing apparatus. As a result, the stage for the hazard detection can be omitted if the pipe line control method is applied to this data processing apparatus. So, especially, the branch instruction can be executed at a high speed. Also, it is not necessary to consider an operation time of the hazard detector. Hence, an operation frequency can be made higher without increasing the number of stages in the pipeline.

In this data processing apparatus according to the present invention, the hazard detector, if an executed result of a first instruction to be executed prior to a second instruction is used by the second instruction included in the plurality of instructions fetched from the instruction memory, outputs the tag data indicating that the second instruction can not be executed simultaneously with the first instruction.

Also, the hazard detector, if a register specified as a reading target of the second instruction is a register specified as a writing target of the first instruction, outputs the tag data indicating that the second instruction can not be executed simultaneously with the first instruction.

In these case, the hazard detector, if a branch instruction is included in the plurality of instructions fetched from the instruction memory, outputs the tag data indicating that instructions to be executed after the branch instruction can not be executed simultaneously with the branch instruction.

### Brief Description of the Drawings

Fig. 1 is a block diagram showing a configuration of a conventional data processing apparatus;
Figs. 2A and 2B are explanatory diagrams describing an operation of the conventional data processing apparatus;
Fig. 3 is a block diagram showing a configuration of a data processing apparatus according to an embodiment of the present invention;
Fig. 4 is a block diagram showing a configuration of a control signal generator that is a part of a hazard detector in Fig. 3;
Fig. 5 is a block diagram showing a configuration of a tag generator that is another part of the hazard detector in Fig. 3;
Fig. 6 is a block diagram showing another configuration of the tag generator that is another part of the hazard detector in Fig. 3; and
Fig. 7 is an explanatory diagram describing an operation of the data processing apparatus according to the embodiment of the present invention.

### Description of the Preferred Embodiments

Now, embodiments of the present invention will be described with reference to the attached drawings. Let us suppose that an instruction used in this data processing apparatus has a three-operand format and that a register is designated as each of operands. Thus, in each of the instructions except some exception which is used in this data processing apparatus, a first operand and a second operand are calculated and the calculated result is stored in a third operand.

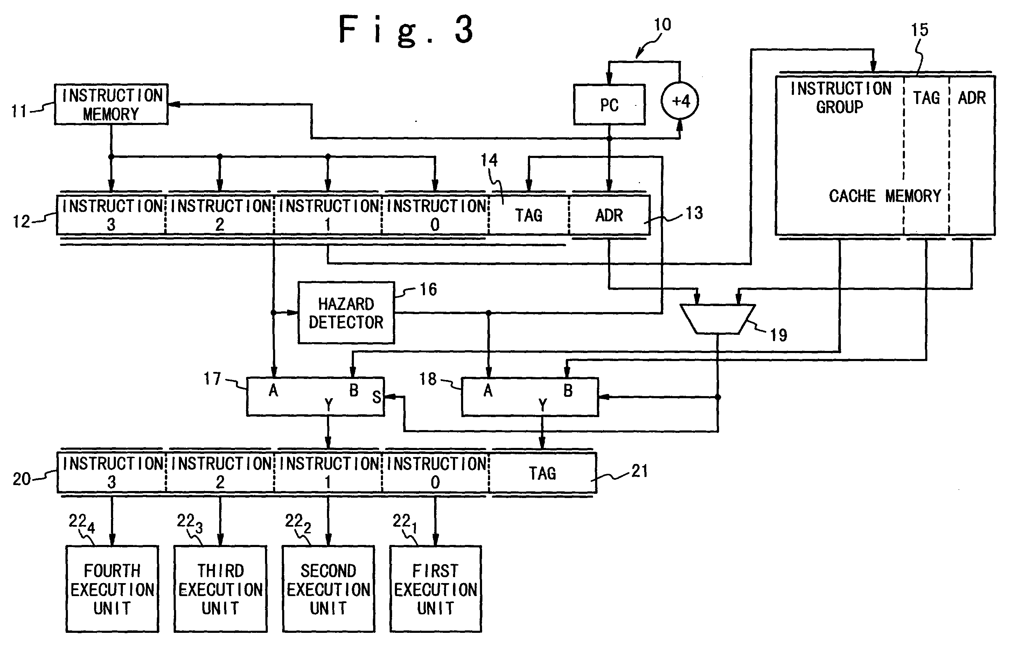

Fig. 3 is a block diagram showing the configuration of the data processing apparatus according to the embodiment of the present invention. This data processing apparatus is composed of a program counter (PC) 10, an instruction memory 11, an instruction buffer 12, an address latch 13, a first tag latch 14, a cache memory 15, a hazard detector 16, a first selector 17, a second selector 18, a comparator 19, an instruction register 20, a second tag latch 21, and a first execution unit 22₁ to a fourth execution unit 22₄.

The program counter 10 is used to control an execution order of instructions included in a program stored in the instruction memory 11. This program counter 10 holds an instruction address to designate an instruction stored in the instruction memory 11. The content of the program counter 10 is incremented by each "+4" associated with the progress of the program. The instruction address outputted from the program counter 10 is sent to the instruction memory 11 and to the address latch 13.

The instruction memory 11 stores therein a plurality of instructions constituting the program. When the instruction address is sent from the program counter 10 to the instruction memory 11, if a later-described hit signal indicates a miss-hit, contents of areas of 16 bytes are read out from the position of the instruction memory 11 which is designated by the instruction address. Thus, four instructions of an instruction 3, an instruction 2, an instruction 1 and an instruction 0 are read out from the instruction memory 11 at the same time. Here, let us suppose that the instruction 3, the instruction 2, the instruction 1 and the instruction 0 are executed on the program in an order of "the instruction 0 -> the instruction 1 -> the instruction 2 -> the instruction 3". A instruction group read out from the instruction memory 11 is sent to the instruction buffer 12.

The instruction buffer 12 transiently stores therein the instruction group read out from the instruction memory 11. A content of the instruction buffer 12 is sent to the cache memory 15, the hazard detector 16 and an input terminal A of the first selector 17.

The address latch 13 latches an instruction address (ADR) from the program counter 10. A content of the address latch 13 is sent to the cache memory 15 and the comparator 19.

The first tag latch 14 latches a tag data from the hazard detector 16. A content of the first tag latch 14 is sent to the cache memory 15.

The cache memory 15 stores therein a plurality of combinations of the instruction group from the instruction buffer 12, the tag data (TAG) from the first tag latch 14 and the instruction address (ADR) form the address latch 13. The instruction group read from the cache memory 15 is sent to an input terminal B of the first selector 17, the tag data (TAG) is sent to an input terminal B of the second selector 18, and the instruction address (ADR) is sent to the comparator 19, respectively.

The comparator 19 compares the instruction address (ADR) from the address latch 13 with the instruction address (ADR) from the cache memory 15, and outputs a hit signal indicative of the compared result. If the hit signal is at "1", it Indicates that both the instruction addresses agree with each other, namely, they hit the cache memory 15. On the other hand, If the hit signal is at "0", it indicates that both the instruction addresses do not agree with each other, namely, they miss-hit the cache memory 15. The hit signal from the comparator 19 is sent to respective selection terminals S of the first selector 17 and the second selector 18.

The first selector 17 selects a signal inputted to the input terminal A if the hit signal from the comparator 19 is at "0" and selects a signal inputted to the input terminal B if it is at "1". Thus, the first selector 17 outputs the instruction group from the cache memory 15 in the case of the hit to the cache memory 15, and outputs the instruction group from the instruction buffer 12 in the case of the miss-hit. The instruction group outputted from the first selector 17 is sent to the instruction register 20.

The second selector 18 selects a signal inputted to the input terminal A if the hit signal from the comparator 19 is at "0", and selects a signal inputted to the input terminal B if it is at "1". Thus, the second selector 18 outputs the tag data (TAG) from the cache memory 15 in the case of the hit to the cache memory 15, and outputs the tag data (TAG) from the hazard detector 16 in the case of the miss-hit. The tag data outputted from the second selector 18 is sent to the second tag latch 21.

The hazard detector 16 analyzes the instruction group sent from the instruction buffer 12 via the first selector 17 if the hit signal indicates the cache miss-hit, and detects an executable instruction in the instruction group. The detected result is sent to the first tag latch 14 and the second tag latch 21 via the second selector 18 as the tag data. Here, the tag data is composed of data of four bits respectively corresponding to the instructions 3 to 0 stored in the instruction register 20. The executable instruction among the instructions 3 to 0 is represented by "0". If the instruction 0 and the instruction 2 can be executed at the same time, the tag data becomes at "1010". This hazard detector 16 will be described later in detail.

The instruction register 20 transiently stores therein the instruction group from the first selector 17. Whether or not the instructions 0 to 3 set in the instruction register 22 are respectively sent to the first execution unit 22₁ to the fourth execution unit 22₄ is controlled in accordance with the tag data from the second tag latch 21. In this case, an instruction corresponding to a tag data "0" stored in the second tag latch 21 is sent to the execution unit. In the above-mentioned example, the instruction 0 is sent to the first execution unit 22₁, the instruction 1 is not sent to the second execution unit 22₂, the instruction 2 is sent to the third execution unit 22₃, and the instruction 3 is not sent to the fourth execution unit 22₄. As a result, the instruction 0 and the instruction 2 are executed at the same time.

Each of the first execution unit 22₁ to the fourth execution unit 22₄ decodes the instruction from the instruction register 20, and executes a process based on the decoded result. The configuration of the data processing apparatus according to the embodiment of the present invention has been functionally described as mentioned above. However, because this data processing apparatus employs the pipeline control method, the instruction fetch, the hazard detection, the instruction decode, the instruction execution and the like are actually overlapped and executed. These details will be described later.

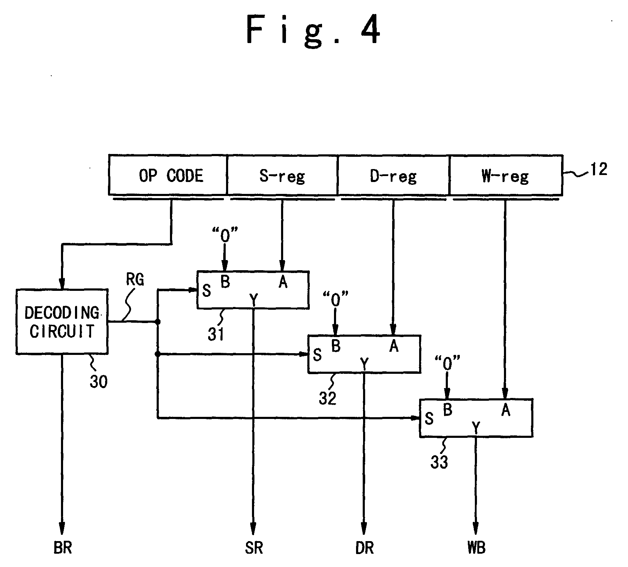

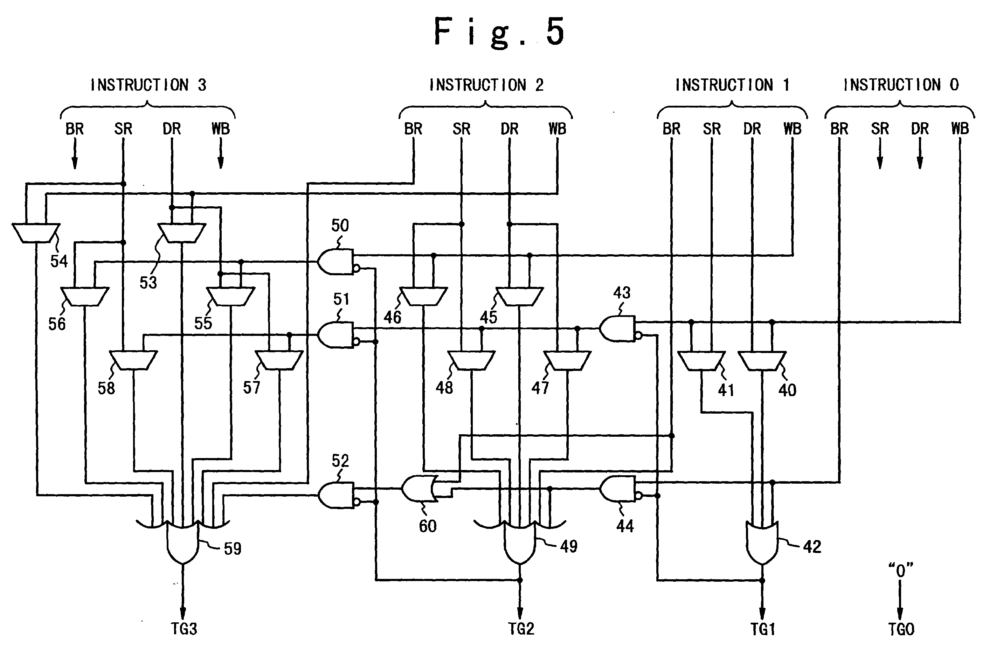

Now, the hazard detector 16 will be described in detail with reference to Figs. 4 and 5. The hazard detector 16 is composed of control signal generators shown in Figs. 4 and tag generators shown in Figs. 5.

The control signal generators are mounted respectively correspondingly to the four instructions stored in the instruction buffer 12. The respective control signal generators have the same configuration. So, only the control signal generator corresponding to one instruction will be described below with reference to Fig. 4, in order to avoid the complexity of the drawing. This control signal generator is composed of a decoding circuit 30, and selectors 31, 32 and 33.

The decoding circuit 30 decodes an operation code section (OP code) of the instruction set in the instruction buffer 12, and generates a branch signal BR indicative of a branch instruction and a register signal RG indicative of a register instruction. The branch signal is sent to the tag generator shown in Fig. 5. The register signal RG is sent to respective selection terminals S of the selectors 31, 32 and 33.

The selector 31, in response to the register signal RG from the decoding circuit 30, selects 0 or a value of a source register indicating portion (S-reg) of the instruction set in the instruction buffer 12, and then outputs as a source register address SR. This source register address SR is sent to the tag generator shown in Fig. 5.

The selector 32, in response to the register signal RG from the decoding circuit 30, selects 0 or a value of a destination register indicating portion (D-reg) of the instruction set in the instruction buffer 12, and then outputs as a destination register address DR. This destination register address DR is sent to the tag generator shown in Fig. 5.

The selector 33, in response to the register signal RG from the decoding circuit 30, selects 0 or a value of a write back register indicating portion (W-reg) of the instruction set in the instruction buffer 12, and then outputs as a write back register address WB. This write back register address WB is sent to the tag generator shown in Fig. 5.

The tag generator in the hazard detector 16 will be described below. The tag generator used in a parallel process of a strong ordering method in which an instruction execution order must not get confused is different from that of a parallel process of a weak ordering method in which the instruction execution order may get confused.

At first, the tag generator in the hazard detector 16 used in the parallel process of the strong ordering method is described with reference to Fig. 5. This tag generator is designed such that comparators 40, 41, 45, 46, 47, 48, 53, 54, 55, 56, 57 and 58, gate circuits 43, 44, 50, 51 and 52, and OR gates 42, 49, 59 and 60 are connected as shown in Fig. 5.

This tag generator generates tag signals TG0 to TG3 in accordance with the branch signal BR, the source register address SR, the destination register address DR and the write back register address WB sent from the control signal generators shown Fig. 4 respectively corresponding to the instructions 0 to 3.

Here, the tag signal TG0 is used to control whether or not the instruction 0 is sent to the first execution unit 22₁. The tag signal TG1 is used to control whether or not the instruction 1 is sent to the second execution unit 22₂. The tag signal TG2 is used to control whether or not the instruction 2 is sent to the third execution unit 22₂. Also, the tag signal TG3 is used to control whether or not the instruction 3 is sent to the fourth execution unit 22₄.

This tag generator generates the tag signals TG1 to TG3 in accordance with the following rule. That is, the execution of the instruction is inhibited, if a source register address SR or a destination register address DR of the instruction agrees with a write back register address WB of an instruction to be executed earlier than the instruction, or if there is a branch instruction to be executed earlier than the instruction.

Actually, the signal process is carried out as follows. That is, in the case of the strong ordering method, an instruction (n) is not executed unless an instruction (n-1) immediately before is executed. So, it is not necessary to investigate a hazard relation between the instruction (n) and the instruction (n-1). Thus, a write back register address WB of the instruction (n-2) is sent through the gate circuits 43, 50 and 51 to the side of the instruction (n), only if the instruction (n-1) is executed. Also, if the branch instruction is executed, instructions after the branch instruction are not executed. Hence, if the branch signal BR is generated in accordance with the instruction (n), the branch signal BR is transmitted through the gate circuits 44, 52 and the OR gate 60 to instructions on and after an instruction (n+1).

When it is described in further detail, the tag generator always outputs "0" as the tag signal TG0. This implies that the instruction 0 is always sent to the first execution unit 22₁ and executed.

The tag signal TG1 is generated as follows. That is, the comparator 41 compares a write back register address WB of the instruction 0 with a destination register address DR of the instruction 1, and if they agree with each other, outputs "1" to the OR gate 42. The comparator 41 compares the write back register address WB of the instruction 0 with a source register address SR of the instruction 1, and if they agree with each other, outputs "1" to the OR gate 42. Also, a branch signal BR from a control signal generator corresponding to the instruction 0 is inputted to the OR gate 42.

Thus, the OR gate 42 outputs "1" as the tag signal TG1 if a register used as a source at the instruction 1 is targeted for the write back at the instruction 0, or if a register used as a destination at the instruction 1 is targeted for the write back at the instruction 0, or if the instruction 0 is the branch instruction. Hence, in those cases, the instruction 1 is not sent to the second execution unit 22₂. So, the execution of the instruction 1 is inhibited.

Also, the tag signal TG2 is generated as follows. That is, the comparator 45 compares a write back register address WB of the instruction 1 with a destination register address DR of the instruction 2, and if they agree with each other, sends "1" to the OR gate 49. The comparator 46 compares the write back register address WB of the instruction 1 with a source register address SR of the instruction 2, and if they agree with each other, sends "1 to the OR gate 49. The comparator 47 compares the write back register address WB of the instruction 0 with the destination register address DR of the instruction 2 under such a condition that the tag signal TG1 is at "0", and if they agree with each other, sends "1" to the OR gate 49. The comparator 48 compares the write back register address WB of the instruction 0 with the source register address SR of the instruction 2 under such a condition that the tag signal TG1 is at "0", and if they agree with each other, sends "1" to the OR gate 49. Also, a branch signal BR from a control signal generator corresponding to the instruction 1 is inputted to the OR gate 49. Moreover, the branch signal BR from the control signal generator corresponding to the instruction 0 is inputted to the OR gate 49, under such a condition that the tag signal TG0 is at "0".

Thus, the OR gate 49 outputs "1" as the tag signal TG2 if a register used as a source at the instruction 2 is targeted for the write back at the instruction 1, if a register used as a destination at the instruction 2 is targeted for the write back at the instruction 1, if the execution of the instruction 1 is not inhibited and also the register used as the source at the instruction 2 is targeted for the write back at the instruction 0, if the execution of the instruction 1 is not inhibited and also the register used as the destination at the instruction 2 is targeted for the write back at the instruction 0, if the instruction 1 is the branch instruction, and if the execution of the instruction 1 is not inhibited and also the instruction 0 is the branch instruction. In those cases, the instruction 2 is not sent to the third execution unit 22₃. So, the execution of the instruction 2 is inhibited.

Moreover, although the detailed explanation is omitted, the tag signal TG3 is generated in accordance with the rule similar to the above-mentioned rule. The tag signals TG0 to TG3 generated as mentioned above are sent to the first tag latch 14 and the second tag latch 21 via the second selector 18.

It should be noted that, in the hazard detector shown in Fig. 5, each of the gate circuits 44, 52 outputs only "0". Thus, since the gate circuits 44, 52 and the OR gate 60 are originally needless circuits, they will be erased after the final logic synthesis. However, it is inserted to assist a logical consideration at a step of a design by a human. For example, the tag TG2 must be set to "0" if the instruction 2 can be executed simultaneously with the instruction 1 even if the tag TG1 is at "1". Hence, if the tag TG1 is at "1", it is necessary to mask the branch signal BR and the write back register address WB of the instruction 0 so as not to have an influence on the tag TG2. So, the write back register address WB is masked by the gate circuit 43, and the branch signal BR is masked by the gate circuit 44. Because of the same reason, if the tag TG2 is at "1", the write back register addresses WB of the instruction 1 and the instruction 0 are masked by the gate circuits 50, 51, and the branch signals BR of the instruction 1 and the instruction 0 are masked by the gate circuit 52 and the OR circuit 60. As mentioned above, though it may be a finally redundant circuit, if it is a logically necessary circuit at the design step, a recent design method tries to reduce the design miss by assembling that circuit.

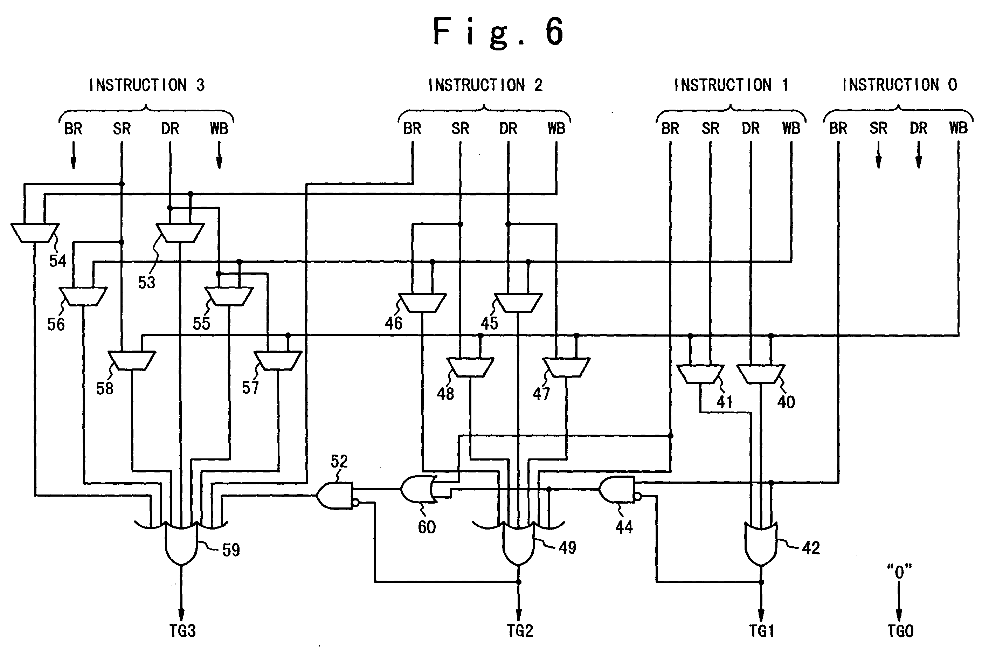

Next, the tag generator in the hazard detector 16 used in the parallel process of the weak ordering method will be described below with reference to Fig. 6. In this tag generator, the gate circuits 43, 50 and 51 shown Fig. 5 are removed from the configuration.

Thus, the judgment as to whether or not the instruction (n) can be executed is done independently of the fact as to whether or not the instruction (n-1) immediately before is executed. In other words, the judgment as to whether or not the instruction (n) can be executed is done in accordance with all the instructions (n-1), the instruction (n-2), ... prior to the instruction (n). Hence, there may be the possibility that even if the execution of the instruction 1 is inhibited, the instructions 0, 2 and 3 are executed at the same time. It should be noted that the treatment of the branch instruction is identical to that of the case of the strong ordering method.

Next, the operation of the data processing apparatus according to the embodiment of the present invention having the above-mentioned configuration will be described below.

At first, if the instruction address from the program counter 10 is latched in the address latch 13 under the empty state of the cache memory 15, the comparator 19 compares the instruction address (ADR) from the address latch 13 with the instruction address (ADR) from the cache memory 15, and generates the hit signal. It should be noted that the mere symbol of the comparator 19 is shown in Fig. 3 for the simple illustration. However, the actual data processing apparatus is designed such that the comparator 19 compares the instruction address (ADR) set in the address latch 13 with all the instruction addresses (ADR) existing in the cache memory 15, and then investigates whether or not there is any coincident existence. Now, the cache memory 15 is empty. Thus, the comparator 19 outputs the hit signal indicative of the cache miss-hit.

On the other hand, when the instruction address outputted from the program counter 10 is sent to the instruction memory 11, since the hit signal from the comparator 19 indicates the cache miss-hit, the instruction group (four instructions 3 to 0) from the instruction memory 11 is fetched and set in the instruction buffer 12. At the same time, a content of the program counter 10 is incremented by "+4" in order to prepare for a next instruction fetch.

When the instruction group fetched from the instruction memory 11 is set in the instruction buffer 12, the hazard detector 16 analyzes the instructions 3 to 0 outputted from the instruction buffer 12, and detects the executable instruction, and then generates the tag data based on the detected result. The tag data generated by the hazard detector 16 is sent to the first tag latch 14 and the input terminal A of the selector 18. Now, the hit signal from the comparator 19 indicates the cache miss-hit. So, the side of the input terminal A is selected in the second selector 18. Thus, the tag data sent to the input terminal A of the second selector 18 from the hazard detector 16 is passed through the second selector 18 and latched in the second tag latch 21.

Next, the combination of the instruction group stored in the instruction buffer 12, the tag data stored in the first tag latch (TAG) 14 and the instruction address (ADR) set in the address latch 13 is stored in the cache memory 15. Also, since the hit signal is at "0", the input terminal A of the first selector 17 is selected. Thus, a content of the instruction buffer 12 is sent to the instruction register 20 via the first selector 17.

Accordingly, as mentioned above, it is controlled whether or not the instructions 3 to 0 set in the instruction register 20 are respectively sent to the first execution unit 22₁ to the fourth execution unit 22₄, in accordance with the tag data from the second tag latch 21. The instructions sent to the execution units are executed at the same time.

The comparator 19 outputs "1" as the hit signal, since an instruction address (ADR) identical to the instruction address (ADR) latched in the address latch 13 exists in the cache memory 15, when the program counter 10 again has the instruction address designating the instructions 3 to 0, after the progress of the program, as mentioned above. Accordingly, this results the inhibition of the tag generating operation in the hazard detector 16 and the instruction fetch from the instruction memory 11.

Also, since the hit signal is at "1", the first selector 17 and the second selector 18 select the signals inputted to the respective input terminals B. Thus, the instruction group read out from the cache memory 15 is set in the instruction register 20, and the tag data (TAG) read out from the cache memory 15 is set in the second tag latch 21. As mentioned above, it is controlled whether or not the instructions 3 to 0 set in the instruction register 20 are respectively sent to the first execution unit 22₁ to the fourth execution unit 22₄, in accordance with the tag data from the second tag latch 21. The instructions sent to the execution units are executed at the same time.

As mentioned above, at the time of the cache hit, the hazard detector 16 does not carry out the tag generating operation. The tag data read out from the cache memory 15 is used to control whether or not the plurality of instructions are executed at the same time. Thus, it is possible to omit a time necessary for the detection of the hazard.

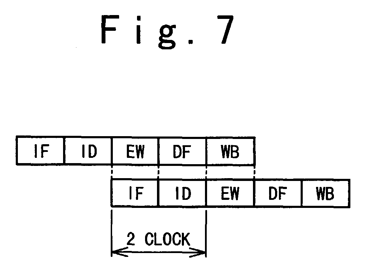

Fig. 7 shows the stage configuration when the above-mentioned operations are performed by using the pipeline control method. In the data processing apparatus according to the embodiment, irrespectively of the branch instruction or the normal instructions (the instructions except the branch instruction), the execution of one instruction is completed by the execution of all stages composed of the instruction fetch (IF), the instruction decode (ID), the instruction execution (EX), the data transfer (DF) and the write (WB). As can be understood from the comparison with Fig. 2A, the respective stages of the hazard detection 1 (D1) and the hazard detection 2 (D2) are omitted in the data processing apparatus according to the embodiment, and the pipeline is constituted by the five stages. Thus, the amount of hardware can be reduced since the number of stages in the pipeline is reduced as mentioned above.

In the case of the branch instruction, if it is judged as the branch instruction at the stage of the instruction decode (ID), an overlap progress of a stage of a next instruction is stopped. The progress of the stage is resumed delayed by one clock, from the stage of the instruction fetch (IF). Thus, in the example shown in Fig. 7, it takes an excessive time corresponding to the one clock if the branch instruction is executed. As can be understood from the comparison with Fig. 2B, in the data processing apparatus according to the embodiment, a processing speed thereof is faster by the two clocks than that of the conventional data processing apparatus.

As mentioned above, in the data processing apparatus according to the embodiment of the present invention, the hazard detection is executed only in the case of the miss-hit to the cache memory. The hazard detection is not done in the case of the hit to the cache memory. Consequently, this leads to the drop of the number of stages of the pipeline and also leads to the drop of the amount of hardware. The execution of the branch instruction only requires one surplus clock as compared with the execution of the normal instructions (the conventional technique requires three surplus clocks). Thus, the speed of the branch instruction can be made faster.

In the above-mentioned embodiment, it is assumed that the number of instructions fetched from the instruction memory and the number of execution units are both 4. However, they are not limited to 4, and any numeral can be selected. Also, the number of execution units does not need to be equal to the number of instructions fetched from the instruction memory. It can be determined in accordance with an occurrence frequency of the number of instructions executed at the same time. For example, if a frequency at which three instructions are executed at the same time is the highest, it may be designed so as to have three execution units. Moreover, in the above-mentioned embodiment, it is assumed that the respective execution units have the same function. However, for example, they may comprise the execution units having different functions, such as a fixed-point operation unit and a floating-point operation unit, in which the numbers of respective execution units are arbitrary. In short, the number of execution units can be suitably determined by considering a function of the data processing apparatus, a kind of a usage instruction, a requested performance, a cost and the like.

As detailed above, the present invention can provide the data processing apparatus and the data processing method, which can process all the instructions including the branch instruction at the high speed, irrespectively of the small hardware.

## Claims

1. A data processing apparatus comprising:
an instruction memory (11) which stores instructions;
a hazard detector (16) which detects whether or not a plurality of instructions fetched from said instruction memory (11) can be executed at a same time, and outputs the detected result as a tag data;
a cache memory (15) which stores a set of said plurality of instructions fetched from said instruction memory (11) and said tag data outputted from said hazard detector (16); and
a plurality of execution units (22₁ to 22₄) which simultaneously executes said plurality of instructions fetched from said cache memory (15) based on said tag data fetched from said cache memory (15).

2. The data processing apparatus according to claim 1,
wherein said hazard detector (16), if an executed result of a first instruction to be executed prior to a second instruction is used by said second instruction included in said plurality of instructions fetched from said instruction memory (11), outputs said tag data indicating that said second instruction can not be executed simultaneously with said first instruction.

3. The data processing apparatus according to claim 2,
wherein said hazard detector (16), if a register specified as a reading target of said second instruction is a register specified as a writing target of said first instruction, outputs said tag data indicating that said second instruction can not be executed simultaneously with said first instruction.

4. The data processing apparatus according to any one of claims 1 to 3,
wherein said hazard detector (16), if a branch instruction is included in said plurality of instructions fetched from said instruction memory (11), outputs said tag data further indicating that instructions to be executed after the branch instruction can not be executed simultaneously with the branch instruction.

5. A data processing method for simultaneously executing a plurality of instructions, comprising:
detecting whether or not said plurality of instructions fetched from an instruction memory (11) can be executed at a same time, and producing the detected result as a tag data;
storing a set of said plurality of instructions and said produced tag data into a cache memory (15); and
simultaneously executing said plurality of instructions fetched from said cache memory (15), based on said tag data fetched from said cache memory (15).

6. The data processing method according to claim 5,
wherein at said detecting step, if an executed result of a first instruction to be executed prior to a second instruction is used by said second instruction included in said plurality of instructions fetched from said instruction memory (11), said tag data is produced for indicating that said second instruction can not be executed simultaneously with said first instruction.

7. The data processing method according to claim 6,
wherein at said detecting step, if a register specified as a reading target of said second instruction is a register specified as a writing target in said first instruction, said tag data is produced for indicating that said second instruction can not be executed simultaneously with said first instruction.

8. The data processing method according to any one of claims 5 to 7,
wherein at said detecting step, if a branch instruction is included in said plurality of instructions fetched from said instruction memory (11), said tag data is produced for further indicating that instructions to be executed after the branch instruction can not be executed simultaneously with the branch instruction.
